# EUROPEAN PATENT SPECIFICATION

(11) **EP 2 942 725 B1**
(45) Date of publication and mention of the grant of the patent: **04.01.2017**
(21) Application number: 14167084.4
(22) Date of filing: 05.05.2014
(51) Int. Cl.: G06F 21/10, H04N 21/418, H04N 21/436, H04N 21/4405, H04N 21/462

(54) **Common interface host and common interface conditional access module**
Host mit gemeinsamer Schnittstelle und bedingtes Zugriffsmodul für gemeinsame Schnittstelle
Hôte d'interface commune et module d'accès conditionnel d'interface commune

(43) Date of publication of application: 11.11.2015
(73) Proprietor: TP Vision Holding B.V., 1097 JB Amsterdam (NL)
(72) Inventor: Martens, Yves Michel Victor Rene, B-8000 Brugge (BE)
(74) Representative: DREISS Patentanwälte PartG mbB

(56) References cited:
- EP-A1- 1 662 361
- WO-A1-2008/033719
- US-A1- 2013 282 807

## Description

### Field of the invention

The invention relates to a Common Interface Conditional Access Module, CICAM, for receiving and decrypting a Content Access, CA, encrypted signal.

### Background of the invention

CI (Common Interface) and CI Plus (Common Interface plus) are content control systems which are currently in use for IP, satellite, terrestrial, and cable television program reception. The CI or CI Plus system comprises a Conditional Access Module (CAM or CICAM) which, when inserted into the corresponding Common Interface slot of a compatible TV set (typically called the CI host), allows a user to subscribe and watch a pay TV service from a pay TV service operator, without requiring an additional set-top-box. The CICAM typically has a slot for inserting a smartcard that is issued by the service operator. The smart card, inserted into or embedded in the CI Plus-CAM, controls the decrypting of those TV programs to which the user is allowed access.

The main difference between CI and CI Plus is that in CI Plus, a trusted channel is formed between the CICAM and television receiver, so that the decrypted content can be re-encrypted, using a key that is known at both ends of the trusted channel, before it is sent back from the CICAM to the receiver. In fact, there are two channels: a control and a data channel. The control channel hosts the Secure Authenticated Channel (SAC), which is created by the CC application/resource. The data channel is used for content. CI Plus offers the possibility to encrypt the content sent from the module to the host using a content key which is provided to the host over the SAC channel. The data channel encryption makes it harder for third parties to "steal" the CAM-decrypted content by sampling the out-going signal from the CAM. In this application, the term SAC will typically be used for the control channel, whereas the term SAC connection (or SAC-based connection) refers to the entire control and data connection between CI host and CAM.

In known CI and CI Plus systems, the physical interface between the CAM and the receiver is formed using a (variant of) a PCMCIA (Personal Computer Memory Card International Association) connector. The PCMCIA standard dates from 1991, and the technology is becoming obsolete. Faster communication links are available, which are also less expensive to implement and require less physical space. One such faster communication link is USB.

The Chinese standard SJ/T 11376-2007 Interface specification for conditional access of digital television receiver Part 2-1: UTI Technical specification, discloses a USB-based UTI interface between a host and a device. On top of the USB (physical) link layer, the full CI/CAM link layer is implemented.

The document "USB Device Class Definition for Video Devices: MPEG-2 TS Payload" version 1.1 by the USB Implementers Forum discloses a manner for transmitting an MPEG Transport Stream over a USB connection, outside of the CICAM context.

Currently, CA encrypted signals often originate from a DVB broadcast, but CA encrypted signals can also originate from an Internet source, for example. DVB Video transmission follows a timing model with a plesiochronous low-jitter and is mostly used in fixed-bandwidth contexts. IP Video transmission can suffer high jitter during transmission, and can involve varying video bandwidth, for example (but not limited to) by using the IP-DASH technology.

To avoid buffer underruns at the receiver decoder, some amount of buffering is required. Variations in transmission jitter and video bandwidth directly affect the required buffering in an IRD, which affects the time required for performing a channel change (zap) between two services.

Any traffic over a USB pipe suffers some amount of jitter. A USB bus may multiplex multiple pipes, for example multiple low-jitter fixed-bandwidth video streams, variable-bandwidth video streams, and other pipes from other USB devices and/or applications. Neither Chinese standard SJ/T 11376-2007 or document "USB Device Class Definition for Video Devices: MPEG-2 TS Payload" version 1.1 by the USB Implementers Forum provide a solution to optimize the video jitter and latency for optimal channel change performance.

Document US2013/0282807-A1 discloses a protocol for communication of information which can be a non-standard universal serial bus (USB) protocol and can guarantee bandwidth and latency for information communication between a USB host and a single USB device by using the USB bulk tranfer mode.

### Summary of the invention

The invention provides a Common Interface, CI, host comprising a Universal Serial Bus, USB, controller for connecting to a USB device of a Common Interface Conditional Access Module, CICAM, the USB controller being configured to use
- a first logical pipe for transferring control information between the CICAM and the CI host; and
- a second logical pipe for transmitting to the CICAM a first CA encrypted signal.
- a third logical pipe for receiving a first CA decrypted signal, corresponding to the first CA encrypted signal, from the CICAM, wherein USB isochronous pipes are used as the second logical pipe and the third logical pipe when the first CA encrypted signal originates from a DVB broadcast and USB bulk pipes are used as the second logical pipe and the third logical pipe when the first CA encrypted signal originates from an Internet source.

By using isochronous pipes for DVB-originating traffic, the USB-induced jitter is minimized, which minimizes decoder buffer requirements and optimizes zap time. Error detection is performed efficiently by the USB framework, and TS-packet-level encapsulation is avoided.

By using bulk pipes for IP-originating traffic, the variable bitrate requirements are handled best-effort by USB, and error detection and correction is performed efficiently by the USB framework, and TS-packet-level encapsulation is avoided.

The incoming and outgoing CA encrypted/decrypted signals, e.g. conditional access or DRM encrypted/decrypted signals, can have any suitable format. Most common are Transport Stream (TS) and ISO Base Media File Format (BMFF) formats. When the signals are transmitted over the USB connection, via the respective logical pipes, the signals can be converted to chunks for USB transmission. After transmission over the USB connection, the original format may be reconstructed.

In an embodiment according the invention, the first CA decrypted signal is a first re-encrypted CA decrypted signal and the CI host is configured to decrypt the re-encrypted first CA decrypted signal. This is compliant with the CI Plus standard, which provides a Content Control (CC) subsystem to protect decrypted signals by re-encrypting them after CA decryption. The re-encryption uses at least a different key (one which is known to the CICAM and the host to which it is connected) from the original CA encryption. In fact, the algorithm for re-encryption may also be different from the original CA encryption algorithm. The re-encryption key is known to both the CI host and the CICAM. The content encryption key is random. The CICAM sends the content encryption key over the SAC to the host. The SAC uses encryption and authentication keys which are derived from a shared secret that was established by a DH (Diffie-Hellman) protocol.

In an embodiment according the invention, the USB controller is further configured to use:
- a fourth logical pipe for transmitting to the CICAM a second CA encrypted signal.
- a fifth logical pipe for receiving a second CA decrypted signal, corresponding to the second CA encrypted signal, from the CICAM.

The USB controller may use N logical pipes for transmitting different CA encrypted signals from the CI host to the CICAM, and N corresponding logical pipes for transmitting CA decrypted signals from the CICAM to the CI host, the 2N logical data pipes forming N pairs for N different CA encrypted/decrypted signals. The total number of pipes, in this embodiment, is then 2N+1, including the control pipe. It is an advantage of this feature that a CICAM may decrypt multiple signals (for example, multiple transport streams (TS) or ISO BMFF streams) at the same time. This would for example make simultaneous recording and viewing of different streams possible.

In an embodiment according the invention, the first logical pipe is a message pipe using the control transfer type. In an embodiment according the invention, the first logical pipe is the default control pipe. The first logical pipe can be the USB 2.0 (or later) Default Control Pipe, for example.

In an embodiment according the invention, the CI host comprises a female Type A USB connector for connecting to a male Type A USB connector of a CICAM. Alternatively, a special type of USB connector may be used to avoid confusion on the part of consumers.

The invention further provides a digital television device, e.g. a Television or a digital cable, terrestrial or satellite receiver, comprising a CI host as described above.

In an embodiment of the digital television device, a decoder buffer with a first size is used by the digital television device when the first CA encrypted signal originates from a DVB broadcast and a decoder buffer of a second size is used by the digital television device when the first CA encrypted signal originates from an Internet source, the first size being smaller than the second size. Due to the characteristics of DVB broadcasts and the use of isochronous pipes, the decoder buffer can be and is kept minimal, resulting in quicker channel changes.

The invention further provides a Conditional Access Module, CICAM, for receiving and decrypting a Content Access, CA, encrypted signal, the CICAM comprising a Universal Serial Bus, USB, device for connecting to a USB controller of a Common Interface, CI, host, the USB device being configured to use
- a first logical pipe for transferring control information between the CICAM and the CI host; and
- a second logical pipe for receiving from the CI host a first CA encrypted signal.
- a third logical pipe for transmitting from the CICAM to the CI host a CA decrypted signal. USB isochronous pipes are used as the second logical pipe and the third logical pipe when the first CA encrypted signal originates from a DVB broadcast and USB bulk pipes are used as the second logical pipe and the third logical pipe when the first CA encrypted signal originates from an Internet source.

In an embodiment according the invention, the CICAM is configured to re-encrypt the first CA decrypted signal, e.g. a conditional access or DRM decrypted signal, prior to transmitting, and the CI host is configured to decrypt the re-encrypted transmitted signal.

In an embodiment according the invention, the CICAM comprises a male Type A USB connector. In an embodiment according the invention, the CICAM comprises a slot for a smart card having a Subscriber Identity Module, SIM, form factor, in particular a mini-SIM card or a micro-SIM card. Alternatively, the smart card functionality may be (permanently) embedded in the USB module. Mini- and micro-SIM cards have form factors that fit well with the dimensions of USB dongle devices. The CICAM may be formed as a USB dongle device, with a Type A USB connector on one side and a SIM slot on the other. In another embodiment, the CICAM comprises a PCMCIA slot instead of or in addition to (a slot for) a smart card. This embodiment provides backward compatibility by allowing conventional CI and CI Plus PCMCIA cards to be used.

The invention further provides a system of a CI host according as described above and a CICAM as described above.

In an embodiment according the invention, the CICAM comprises a male Type A USB connector. In an embodiment, the CICAM comprises a slot for a smart card having a Subscriber Identity Module (SIM) form factor.

The invention also provides a system of a CICAM as described above and a CI host.

The invention also provides a method for decrypting a CA encrypted stream by a CI host and/or CICAM as described above.

In the disclosure, reference is sometimes made to USB 2.0 and USB 3.0 to illustrate certain points or possible alternatives. However, unless stated otherwise, the invention can be applied to any USB standard, including future USB versions with suitable backward compatibility.

### Brief description of the Figures

On the attached drawing sheets,
- figure 1 schematically shows a system of a CICAM and a digital TV receiver according to an embodiment of the invention;
- figure 2 schematically shows a CICAM according to an embodiment of the invention;
- figure 3 shows a schematic view of logical pipes between a CICAM device connected to a host receiver;
- figure 4 shows an alternative schematic view of logical pipes between a CICAM device connected to a host receiver; and
- figure 5 shows a further alternative schematic view of logical pipes between a CICAM device connected to a host receiver; and
- figure 6 shows an example of a data chunk for transmission over a logical data pipe.

### Detailed description

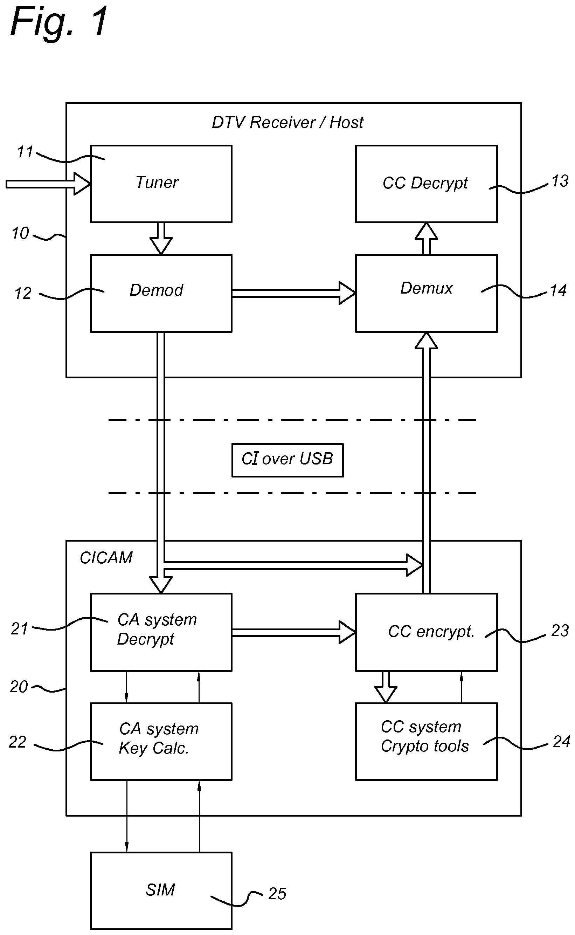

Figure 1 schematically shows a system of a CICAM 20 and a digital TV receiver or host 10 according to an embodiment of the invention.

Generally, the host 10 is a consumer electronics device, e.g. a Television, that is used to receive and navigate the broadcast digital media. The host includes one or more slots which accept CICAMs. In an embodiment, the CICAM slot of the host has the form of a USB connector. In an embodiment, the slot is configured to receive a Type A USB connector. However, other USB forms (e.g. mini-USB or micro-USB may also be used).

Typically the host device contains some form of tuner 11, a demodulator 12, a demultiplexer (Demux) 14 and media decoders (not shown). These are the usual pre-requisites for the reception of digital TV.

For free-to-air material this is all that is required to receive and decode digital content, for content protected by a CA system a CICAM is required. DVB CICAMs that comply with the CI standard EN 50221 have no Content Control system 23, 24 to protect the descrambled content. In CI systems, content where the CA system protection has been removed is passed to the host unprotected.

Hosts compliant with the CI Plus standard have a Content Control decryption module 13. The CI Plus host interoperates with the CICAM to provide a secure content control system 13, 23, 24 to protect high value content which has been CA decrypted.

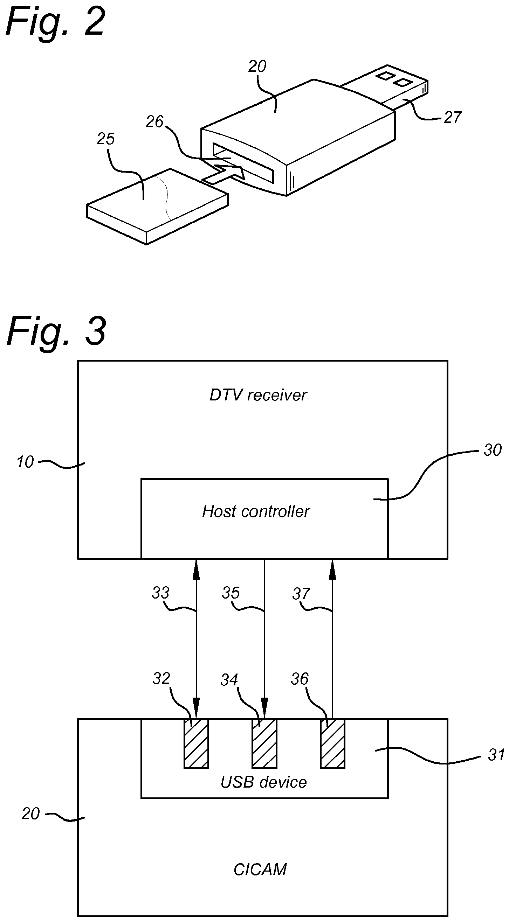

The CICAM contains the consumer end of the CA system. It comprises a CA decryption module 21 for decrypting secure content, a CA key calculation module 22 for calculating keys based in part on data from a smart card 25, and a smart card interface 26 (see figure 2) for receiving the smart card. Typically, the keys to decrypt CA protected content (the so-called control words) are provided by the smart card directly to the DVB descrambler on the module. Alternatively, the smart card and DVB descrambler on the module share or negotiate a cryptographic key that is used to encrypt the control words when transmitted from the smart card to the module (this to prevent interception and the real-time distribution of control words).

CI Plus CAMs (hereafter also denoted as CICAM) also include Content Control (CC) modules for re-encrypting the CA decrypted signal. The module implements the CC application that communicates over the control channel which the CC resource implemented in the host The Content Control encryption module 23 thus re-encrypts the content using a key that has been agreed on a shared secure channel between the CICAM and the host. The CC system crypto tools module 24 facilitates in generating keys and setting up a secure channel with the host. Module 24 also contains cryptographic tools and features which enable it to authenticate the trustworthiness of the host the CICAM has been inserted into.

Figure 2 schematically shows a perspective view of CICAM 20 according to an embodiment of the invention. The CICAM 20 has a slot 26 for receiving a module 25 which functions as smart card 25. The module 25 can have the form factor of a mini-SIM (Subscriber Identity Module) as is known from mobile telephone applications. A micro-SIM form factor may also be used. The CICAM 20 has a male Type A USB (Universal Serial Bus) connector 27 for insertion into a corresponding female USB connector of a host (not shown).

When the CICAM 20 connector 27 is inserted in a corresponding USB slot of a host, a CI over USB connection is formed. In the downstream direction (defined as the direction from the host to the CICAM) the CA encrypted content is transmitted, and in the upstream direction (defined as the direction from the CICAM to the host), the decrypted content (CI standard) or CC encrypted content (CI Plus standard) is transmitted.

Before further details of the CI over USB link are provided, some background information on USB is given.

USB was originally designed as a standard for connecting peripheral devices to computers. In recent years, it has become commonly used in all sorts of (consumer) electronics devices. USB standard 1.0 offered 1.5 Mbit/s transfer speed. Later versions increased this speed, with USB 2.0 offering 480 Mbit/s over 4 physical wires. The wires are typically labelled Vcc (5 Volt), GND (ground), D-, and D+, with the latter two wires forming a twisted-pair for data.

USB 3.0, described in the USB 3.0 Specification Revision 1.0 dated June 6, 2011, is similar to earlier versions of USB in that it is a cable bus supporting data exchange between a host computer and a wide range of simultaneously accessible peripherals. The attached peripherals share bandwidth through a host-scheduled protocol. The bus allows peripherals to be attached, configured, used, and detached while the host and other peripherals are in operation. However, in contrast to USB 2.0 and earlier versions, USB 3.0 utilizes 10 wires. In addition to the 4 wires of previous USB standards, six wires for three additional twisted pairs are added.

USB 3.0 utilizes a dual-bus architecture that provides backward compatibility with USB 2.0. It provides for simultaneous operation of SuperSpeed and non-SuperSpeed (USB 2.0 speeds) information exchanges.

USB device communication is based on logical channels called "pipes" between a host controller (in one device) to a logical entity called the endpoint, on another device. There are two types of pipes: stream (or data) and message pipes. A message pipe is bi-directional and is used for control transfers. Message pipes use the control transfer type, and are typically used for command traffic from the host to the device and vice versa. A stream pipe is a uni-directional pipe connected to a uni-directional endpoint that transfers data using one of three other transfer types: isochronous, interrupt, or bulk transfer.

Isochronous transfers take place at some guaranteed data rate, with possible occasional data loss. Interrupt transfers are suitable for quick responses, for example for mice and keyboard peripherals. Bulk transfers are large sporadic transfers using all remaining available bandwidth, but with no guarantees on bandwidth or latency.

In USB 3.0, most pipes come into existence when the device is configured by system software. However, one message pipe, the Default Control Pipe, always exists once a device has been powered and is in the default state, to provide access to the device's configuration, status, and control information.

Also in USB 3.0, the bulk transfer type has an extension for SuperSpeed called Streams. Streams provide inband, protocol-level support for multiplexing multiple independent logical data streams through a standard bulk pipe.

Despite the fact that USB 3.0 can be said to be a full-duplex protocol, the logical pipes are still considered to be uni-directional. That is, for bi-direction data communication (data exchange), two logical pipes must be created (see e.g. section 4.4.6 on Bulk Transfers of the USB 3.0 Specification Rev 1.0 dated June 6, 2011). While it is sometimes said that USB 3.0 supports bi-directional data pipes, these bi-directional data pipes in fact consist of two logical pipes, one for upstream and one for downstream data communications. If a future USB version defines true bi-directional data pipes (using e.g. a bulk transfer type), then the invention may be practiced using such a bi-directional pipe. Such a bi-directional pipe can then be considered to embody two uni-directional data pipes as described in this disclosure.

Figure 3 shows a schematic view of logical pipes between a CICAM device 20 connected to a host receiver 10. In this embodiment, the receiver is thus a host 10 in both the sense of the CI and CI Plus standard, and also a host (controller) in the sense of the USB standard, so that the receiver includes the USB host controller 30. However, it is possible to conceive embodiments in which the CICAM device plays the role of the USB host.

The USB device 31 in the CICAM device has three logical endpoints 32, 34, and 36. Endpoint 32 is connected to message pipe 33, for bi-directionally transmitting control traffic to and from the CICAM device using a control transfer type. In an embodiment, pipe 33 is the default control pipe (also known as "pipe 0"). Endpoint 34 is connected to downstream pipe 35 for receiving (at the CICAM device) CA encrypted video data. Endpoint 36 is connected to upstream pipe 37 for transmitting (from the CICAM device) CC encrypted video data.

USB isochronous pipes are used as the second logical pipe 35 and the third logical pipe 37 when the first CA encrypted signal originates from a DVB broadcast and USB bulk pipes are used as the second logical pipe 35 and the third logical pipe 37 when the first CA encrypted signal originates from an Internet source. When the USB isochronous pipes are used, the decoder buffer of DTV Receiver 10 can be kept minimal, resulting in quicker channel changes.

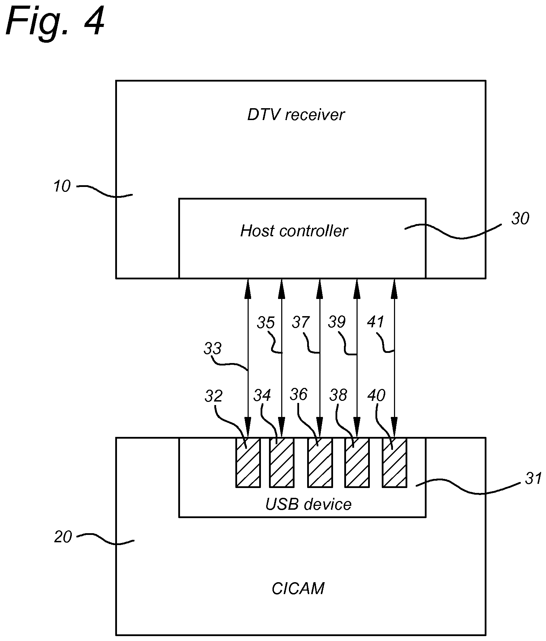

Figure 4 shows a further embodiment according the invention. Now there are five logical pipes between a CICAM device 20 connected to host receiver 10. Pipe 33 is still a message pipe (e.g. pipe 0) connected to endpoint 32, as described in reference to figure 3. Pipe 35 (connected to endpoint 34) transports, from the CI host to the CICAM, a first CA encrypted signal. Pipe 37 (endpoint 36) again transports, from the CICAM to the CI host, a first CA decrypted signal, which is obtained by decrypting the first CA encrypted signal and optionally re-encrypting it using a further key known to both the CICAM and the CI host. Pipe 39 (endpoint 38) is like pipe 35, except that here a second CA encrypted signal is transmitted. Pipe 41 (endpoint 40) is like pipe 37, except that a second CA decrypted signal is transmitted. The second CA encrypted signal may carry a different signal than the first CA encrypted signal. In that manner, the system thus supports the simultaneous decryption of multiple CA encrypted streams. USB isochronous pipes are used as the pipes 39 and 41 when the second CA encrypted signal originates from a DVB broadcast and USB bulk pipes are used as the pipes 39 and 41 when the second CA encrypted signal originates from an Internet source.

Figures 3 and 4 are examples of a more general embodiment of the invention in which N CA encrypted signals are received at the CICAM via N respective pipes/endpoints en N corresponding CA decrypted signals (possibly re-encrypted using a further key) are received at the CI host via N respective pipes/endpoints, where N=1 (figure 3), N=2 (figure 4), or N is equal to an integer value > 2.

In an embodiment, a total of 2N+1 pipes are provided: N upstream data pipes and N downstream data pipes, as described above, and 1 control pipe for exchanging control messages.

In the embodiments of figure 3 and figure 4 and the more general embodiment of 2N+1 pipes, the control traffic between CICAM and receiver/host is handled by a bidirectional pipe, preferably a message pipe using a control transfer type, for example by pipe 0. The stream content (e.g. audio/video) data is handled in one or more separate pipes. The stream content data can be transmitted using a variety of transfer types.

The CA encrypted and CA decrypted data can in principle be in any (streaming) format. However, Transport Streams (TS) and ISO BMFF are the most common carriers of the type of data (audio/video) transmitted between CI and CICAM.

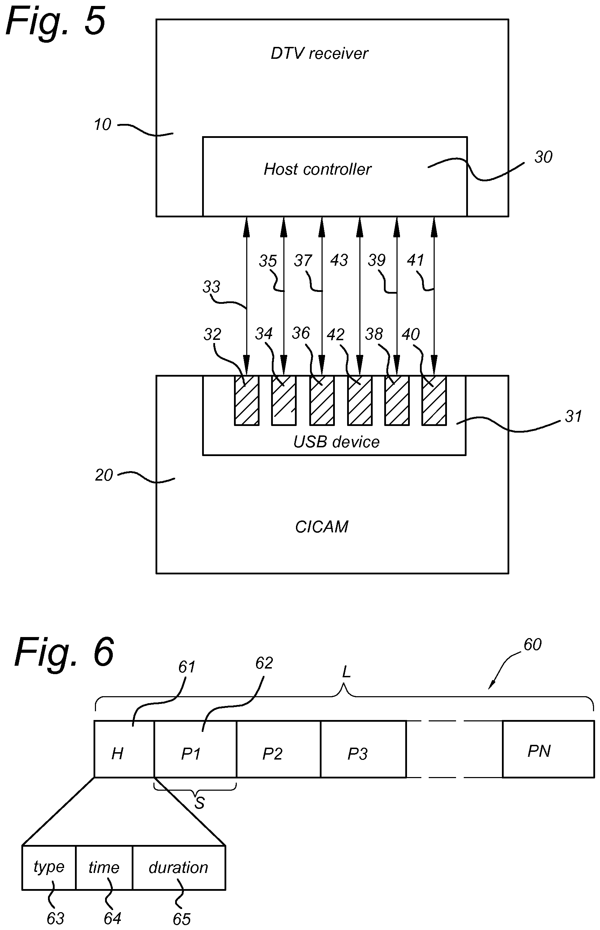

Figure 5 shows a further embodiment of the invention. The key difference between the embodiment of figure 4 is that two control pipes are defined. Bidirectional control pipe 33 still transmits control messages related to pipes 35 and 37. However, the control messages for pipes 39 and 41 are now sent over second control pipe 43 with endpoint 42.

The alternative of figure 5 is most appropriate when a single CAM is connected to two CI / CI-Plus hosts simultaneously. Each CI-Plus host will then negotiate its own Secure Authenticated Channel with the CAM, which can be advantageously assigned to a unique bidirectional message pipe 33, 43. In other words, the system will provide 2N+1 pipes for a first CI host and 2M+1 pipes for a second host, where N and M are numbers of transport streams to be decoded. The invention is not limited to two hosts, more hosts are possible too. For example, if P hosts are connected, each of the P hosts decrypting Np transport streams, there will be P control pipes, and 2PN_{P} data pipes, so (2N_{P}+1)P pipes in total.

Preferably, the data sent over the data pipes is organized in USB chunks. There are various options available for "repackaging" the CA encrypted/decrypted data for transport over the USB interface between CI en CICAM. In the case of TS input, a straightforward way would be to map each TS packet to a single USB chunk. However, this would not be a very efficient way since TS packets comprise 188 bytes, while USB chunks are typically several kiloBytes (kB) in size. A possible way would be to package items at a higher abstraction layer than the packet layer in separate chunks. For example, TS tables, which are split up and transmitted over several TS packets, can be re-assembled in the CI host and then sent as a single "table chunk" over the USB interface to the CICAM.

Figure 6 shows an example data chunk 60 for transmission over a USB interface (either upstream or downstream). The chunk 60 has a data or payload part 62 and a header 61.

The header 61 can be used to indicate the type of contents of the chunk. For example, it may indicate which table or TS packet is included in the payload. In an embodiment, the header 61 has a type field 63 for characterising the payload. The header 61 may comprise a time field 64 indicating a time stamp of the payload, for example the time stamp of the first TS packet of a transport stream payload. The header 61 may comprise a duration field 65 indicating a duration of the payload. the time field 64 and duration field 65 can be used for clock recovery in the CICAM system.

The payload can comprise N packets P₁, P₂, P₃, ..., P_{N}. In the case of a MPEG transport stream, the size s of the packets may be 188 Bytes (B), while the total size L of the chunk including header and payload may be of the order of 64 kiloByte (kB). For clock recovery, it is not essential that each packet is individually labelled with a time and duration value. Bundling N packets into a single chunk with a single header 61 advantageously prevents overhead compared to known variants in which each packet is encapsulated.

In addition, it is not necessary to include, as some standards do, CRC headers and other error-correction or detection data in the data chunks. For data integrity checks, the native USB bulk transfer provisions may be used. It is thus not necessary to replicate the error-correcting and detecting part of any transport layer that is mapped to the USB link. This also significantly reduces overhead.

The incoming (to be CA decrypted) TS or ISO BMFF stream (or any other suitable stream that is to be decrypted in the CICAM) can thus be converted by the CI host to a stream of USB data chunks. With the aid of the headers of the USB data chunks and/or messages on the control pipe, the receiving CICAM can reconstruct the TS or ISO BMFF stream, so that the CA encrypted signal can be decrypted. It may not be necessary to fully convert the chunks back to TS or ISO BMFF format - it is sufficient if the CICAM can identify which parts of the incoming data it needs to decrypt. After decryption an optional (for CI Plus) re-encryption, the CA decrypted data is converted again to USB chunks (if needed), and transmitted from the CICAM back to the CI over the USB link, using a suitable logical pipe. The CI host then recreates the original TS or ISO BMFF format as needed for further processing in the digital receiver or television.

Finally, some explanation is given regarding the control messages. In an embodiment, the default PIPE of the USB device is reserved exclusively for the control-layer of CI/CI Plus. One or more additional pipes are used to transfer the content. As shown in reference to figure 5, multiple control pipes may be defined. However, for now we assume a single pipe exists. In an embodiment, the control-layer of CI/CI Plus should be interpreted as the "session layer" and all higher layers in the Command Interfaces Layers stack as shown in figure 4 of CI standard EN 50221 (1997). In other words, traffic generated by the control-layer of CI/CI Plus is considered control traffic that will be transmitted over the dedicated bidirectional message or control pipe, such as pipe 0.

In summary, in an embodiment, the data pipes (e.g. pipes 35, 37, 39, 41) transmit chunks with a "tag-length-value" format. The data transmitted over the data pipe is transmitted as chunks, each chunk having a header. The data thus consists of "descriptors" (header) and "payload". In an embodiment, descriptors are time-stamped. Either or both a duration or a second time stamp to mark the end of the data may also be added. The content format should be described. There may be two different content formats, TS (Transport Stream) and ISO BMFF (Base Media File Format). In another embodiment, the encrypted and/or decrypted may be transmitted over a USB interface without the use of chunks or without the use of the above-described chunks.

In an embodiment, for the control layer each packet in the default PIPE has the same "tag-length-value" format as in the common interface. It starts with the protocol objects as defined in EN 50221 7.1.2.

In the foregoing description of the figures, the invention has been described with reference to specific embodiments thereof. It will, however, be evident that various modifications and changes may be made thereto without departing from the scope of the invention as summarized in the attached claims.

It is noted that in the examples reference is mostly made to a CI-Plus system. However, the invention can also be used in connection with a CI system.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Common Interface, CI, host (10) comprising a Universal Serial Bus, USB, controller (30) for connecting to a USB device (31) of a Common Interface Conditional Access Module, CICAM, (20) the USB controller being configured to use
- a first logical pipe (33) for transferring control information between the CICAM and the CI host; and
- a second logical pipe (35) for transmitting to the CICAM a first CA encrypted signal.
- a third logical pipe (37) for receiving a first CA decrypted signal, corresponding to the first CA encrypted signal, from the CICAM,
wherein USB isochronous pipes are used as the second logical pipe (35) and the third logical pipe (37) when the first CA encrypted signal originates from a DVB broadcast, **characterised in that** :
USB bulk pipes are used as the second logical pipe (35) and the third logical pipe (37) when the first CA encrypted signal originates from an Internet source.

2. Digital television device comprising a CI host (10) according claim 1.

3. Digital television device according to claim 2, wherein a decoder buffer with a first size is used by the digital television device when the first CA encrypted signal originates from a DVB broadcast and a decoder buffer of a second size is used by the digital television device when the first CA encrypted signal originates from an Internet source, the first size being smaller than the second size.

4. Common Interface Conditional Access Module, CICAM, (20) for receiving and decrypting a Content Access, CA, encrypted signal, the CICAM (20) comprising a Universal Serial Bus, USB, device (31) for connecting to a USB controller (30) of a Common Interface, CI, host, (10) the USB device being configured to use
- a first logical pipe (33) for transferring control information between the CICAM and the CI host; and
- a second logical pipe (35) for receiving from the CI host a first CA encrypted signal.
- a third logical pipe (37) for transmitting from the CICAM to the CI host a CA decrypted signal,
Wherein USB isochronous pipes are used as the second logical pipe (35) and the third logical pipe (37) when the first CA encrypted signal originates from a DVB broadcast, **characterised in that**:
USB bulk pipes are used as the second logical pipe (35) and the third logical pipe (37) when the first CA encrypted signal originates from an Internet source.

5. System (10, 20) of a CI host (10) according to claim 1 and a CICAM (20) according to claim 4.

## Patentansprüche

1. Host mit allgemeiner Schnittstelle, CI-Host, (10), der eine Steuereinheit eines universellen seriellen Busses, USB-Steuereinheit, (30) zum Verbinden mit einer USB-Vorrichtung (31) eines Common Interface Conditional Access-Moduls, CICAM, (20) umfasst, wobei die USB-Steuereinheit konfiguriert ist, Folgendes zu verwenden:
- eine erste logische Leitung (33) zum Übertragen von Steuerinformationen zwischen dem CICAM und dem CI-Host; und
- eine zweite logische Leitung (35) zum Senden eines ersten CA-verschlüsselten Signals an das CICAM,
- eine dritte logische Leitung (37) zum Empfangen eines ersten CA-entschlüsselten Signals, das dem ersten CA-verschlüsselten Signal entspricht, von dem CICAM,
wobei nicht USB-synchrone Leitungen als die zweite logische Leitung (35) und die dritte logische Leitung (37) verwendet werden, wenn das erste CA-verschlüsselte Signal von einer DVB-Sendung stammt, **dadurch gekennzeichnet, dass**:
USB-Bulk-Leitungen als die zweite logische Leitung (35) und die dritte logische Leitung (37) verwendet werden, wenn das erste CA-verschlüsselte Signal von einer Internet-Quelle stammt.

2. Digitale Fernsehvorrichtung, die einen CI-Host (10) nach Anspruch 1 umfasst.

3. Digitale Fernsehvorrichtung nach Anspruch 2, wobei ein Decodiererzwischenspeicher mit einer ersten Größe durch die digitale Fernsehvorrichtung verwendet wird, wenn das erste CA-verschlüsselte Signal von einer DVB-Sendung stammt, und ein Decodiererzwischenspeicher einer zweiten Größe durch die digitale Fernsehvorrichtung verwendet wird, wenn das erste CA-verschlüsselte Signal von einer Internet-Quelle stammt, wobei die erste Größe kleiner als die zweite Größe ist.

4. Common Interface Conditional Access-Modul, CICAM, (20) zum Empfangen und Entschlüsseln eines Content Accessverschlüsselten, CA-verschlüsselten, Signals, wobei das CICAM (20) eine Vorrichtung eines universellen seriellen Busses, USB-Vorrichtung, (31) zum Verbinden mit einer USB-Steuereinheit (30) eines Hosts mit allgemeiner Schnittstelle, CI-Hosts, (10) umfasst, wobei die USB-Vorrichtung konfiguriert ist, Folgendes zu verwenden:
- eine erste logische Leitung (33) zum Übertragen von Steuerinformationen zwischen dem CICAM und dem CI-Host; und
- eine zweite logische Leitung (35) zum Empfangen eines ersten CA-verschlüsselten Signals von dem CI-Host,
- eine dritte logische Leitung (37) zum Senden eines CA-verschlüsselten Signals von dem CICAM an den CI-Host,
wobei nicht USB-synchrone Leitungen als die zweite logische Leitung (35) und die dritte logische Leitung (37) verwendet werden, wenn das erste CA-verschlüsselte Signal von einer DVB-Sendung stammt, **dadurch gekennzeichnet, dass**:
USB-Bulk-Leitungen als die zweite logische Leitung (35) und die dritte logische Leitung (37) verwendet werden, wenn das erste CA-verschlüsselte Signal von einer Internet-Quelle stammt.

5. System (10, 20) eines CI-Hosts (10) nach Anspruch 1 und eines CICAM (20) nach Anspruch 4.

## Revendications

1. Hôte à interface commune, CI, (10) comprenant un contrôleur de bus série universel, USB, (30) pour se connecter à un dispositif USB (31) d'un module d'accès conditionnel à interface commune, CICAM, (20), le contrôleur USB étant configuré pour utiliser :
- un premier tuyau logique (33) pour transférer des informations de commande entre le CICAM et l'hôte CI; et
- un deuxième tuyau logique (35) pour transmettre au CICAM un premier signal crypté d'accès conditionnel (CA);
- un troisième tuyau logique (37) pour recevoir un premier signal décrypté CA, correspondant au premier signal crypté CA, en provenance du CICAM,
dans lequel des tuyaux isochrones USB sont utilisés comme deuxième tuyau logique (35) et troisième tuyau logique (37) lorsque le premier signal crypté CA provient d'une diffusion DVB, **caractérisée en ce que**
des tuyaux en masse USB sont utilisés comme deuxième tuyau logique (35) et troisième tuyau logique (37) lorsque le premier signal crypté CA provient d'une source Internet.

2. Dispositif de télévision numérique comprenant un hôte CI (10) selon la revendication 1.

3. Dispositif de télévision numérique selon la revendication 2, dans lequel un tampon décodeur d'une première taille est utilisé par le dispositif de télévision numérique lorsque le premier signal crypté CA provient d'une diffusion DVB, et un tampon décodeur d'une seconde taille est utilisé par le dispositif de télévision numérique lorsque le premier signal crypté CA provient d'une source Internet, la première taille étant plus petite que la seconde taille.

4. Module d'accès conditionnel à interface commune, CICAM, (20) pour recevoir et décrypter un signal crypté à accès de contenu, CA, le CICAM (20) comprenant un dispositif USB (31) pour se connecter à un contrôleur de bus série universel (30) d'un hôte à interface commune, CI, (10), le dispositif USB étant configuré pour utiliser :
- un premier tuyau logique (33) pour transférer des informations de commande entre le CICAM et l'hôte CI ; et
- un deuxième tuyau logique (35) pour recevoir de l'hôte CI un premier signal crypté d'accès conditionnel (CA) ;
- un troisième tuyau logique (37) pour transférer un signal décrypté CA, en provenance du CICAM, à l'hôte CI,
dans lequel des tuyaux isochrones USB sont utilisés comme deuxième tuyau logique (35) et troisième tuyau logique (37) lorsque le premier signal crypté CA provient d'une diffusion DVB, **caractérisée en ce que** :
des tuyaux en masse USB sont utilisés comme deuxième tuyau logique (35) et troisième tuyau logique (37) lorsque le premier signal crypté CA provient d'une source Internet.

5. Système (10, 20) d'un hôte CI (10) selon la revendication 1 et d'un CICAM (20) selon la revendication 4.
